(19) Europäisches Patentamt
European Patent Office
Office européen des brevets

(11) **EP 4 121 731 B1**

(12) **EUROPÄISCHE PATENTSCHRIFT**

(45) Veröffentlichungstag und Bekanntmachung des Hinweises auf die Patenterteilung:
**12.06.2024 Patentblatt 2024/24**

(21) Anmeldenummer: **21720165.6**

(22) Anmeldetag: **16.03.2021**

(51) Internationale Patentklassifikation (IPC):
**G01L 25/00** (2006.01)  **G01M 13/027** (2019.01)
**G01M 15/02** (2006.01)

(52) Gemeinsame Patentklassifikation (CPC):
**G01L 25/003; G01M 13/027; G01M 15/02**

(86) Internationale Anmeldenummer:
**PCT/AT2021/060091**

(87) Internationale Veröffentlichungsnummer:
**WO 2021/184054 (23.09.2021 Gazette 2021/38)**

(54) **VERFAHREN ZUM JUSTIEREN EINES PIEZOELEKTRISCHEN DREHMOMENTSENSORS**

METHOD FOR ADJUSTING A PIEZOELECTRIC TORQUE SENSOR

PROCÉDÉ DE RÉGLAGE D'UN CAPTEUR DE COUPLE PIÉZOÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.03.2020 AT 502332020**

(43) Veröffentlichungstag der Anmeldung:
**25.01.2023 Patentblatt 2023/04**

(73) Patentinhaber:
• **AVL List GmbH**
**8020 Graz (AT)**
• **Piezocryst Advanced Sensorics GmbH**
**8020 Graz (AT)**

(72) Erfinder:
• **KOKAL, Helmut**
**8020 Graz (AT)**
• **SCHRICKER, Alexander**
**8046 Graz (AT)**
• **GRIESSER, Gregor**
**8786 Rottenmann (AT)**

(74) Vertreter: **Hahner, Ralph**
**Wallinger Ricker Schlotter Tostmann**
**Patent- und Rechtsanwälte Partnerschaft mbB**
**Zweibrückenstraße 5-7**
**80331 München (DE)**

(56) Entgegenhaltungen:
AT-U2- 11 331          DE-A1-102007 040 106
DE-B4-102007 040 106

• **OHZEKI H ET AL: "DEVELOPMENT OF A MAGNETOSTRICTIVE TORQUE SENSOR FOR MILLING PROCESSMONITORING", TRANSACTIONS OF THE AMERICAN SOCIETY OF MECHANICAL ENGINEERS,SERIES B: JOURNAL OF ENGINEERING FOR INDUSTRY, ASME. NEW YORK, US, Bd. 121, Nr. 4, 1. November 1999 (1999-11-01), Seiten 615-622, XP000966323, ISSN: 0022-0817**
• **CHANGYIN GAO ET AL: "Principle and manufacture of a new type of torque sensor based on the torsional effect of a piezoelectric quartz disc; Principle and manufacture of a new type of torque sensor", MEASUREMENT SCIENCE AND TECHNOLOGY, IOP, BRISTOL, GB, Bd. 17, Nr. 2, 1. Februar 2006 (2006-02-01), Seiten 323-330, XP020103380, ISSN: 0957-0233, DOI: 10.1088/0957-0233/17/2/013**

**Beschreibung**

Die Erfindung betrifft ein Verfahren zum Justieren eines piezoelektrischen Drehmomentsensors einer Messvorrichtung, vorzugsweise eines Prüfstands, zum Bestimmen eines Drehmoments, welches an einem Prüfling anliegt, wobei die Messvorrichtung einen piezoelektrischen Drehmomentsensor aufweist.

Bei der Entwicklung und Regelung von Motoren, insbesondere Brennkraftmaschinen oder Elektromaschinen, ist eine möglichst genaue Kenntnis des Drehmoments an der Welle des Motors wichtig, insbesondere im Prüfstandsbetrieb.

Aus dem Stand der Technik ist bekannt, hierfür Messsysteme mit Dehnungsmessstreifen oder auch Piezosensoren einzusetzen.

Dehnungsmessstreifen und ähnliche Messelemente dienen im Allgemeinen dazu, statische Kräfte zu messen. Im Allgemeinen haben Messsysteme mit einer solchen Art von Messelementen, aufgrund ihres Aufbaus, jedoch eine zu lange Reaktionszeit, um dynamische Kraftverläufe zu messen.

Piezoelektrische Drehmomentsensoren weisen Piezoelemente auf, welche auf der Grundlage des piezoelektrischen Effekts eine Spannung erzeugen, wenn an diesen eine Kraft einwirkt.

Dies beruht auf dem Prinzip, dass elektrische Spannungen an dem Piezoelement auftreten, wenn dieses elastisch verformt wird. Durch die Verformung eines piezoelektrischen Elements bilden sich mikroskopische Dipole innerhalb der Elementarzellen des Piezoelements. Die Aufsummierung über das damit verbundene elektrische Feld in allen Elementarzellen des Piezoelements führt zu einer makroskopisch messbaren elektrischen Spannung bei einer Verformung bzw. bei Einwirken einer Kraft. Im Normalfall wird die Ladungsverschiebung mittels Ladungsspannungswandlern, auch Ladungsverstärker genannt, gemessen.

Mittels dem Messprinzip von piezoelektrischen Messelementen bzw. Piezoelementen können kurzzeitig auftretende Kräfte bzw. Kräfte, welche mit einer gewissen Frequenz auftreten, gut gemessen werden. Für Messungen einer Kraft über einen längeren Zeitraum, beispielsweise einer stationären Kraft, ist das Messprinzip eines Piezoelements aber weniger geeignet, da das Messsignal einer zeitlichen Drift unterliegt. Piezoelemente eignen sich daher zur Messung dynamischer Zug-, Druck- und Scherkräfte. Diese haben einen breiten Dynamikbereich, sind steif und können auch hochdynamische Kräfte bei gleichzeitig hoher Auflösung messen. Piezoelektrische Sensoren haben aufgrund ihres Aufbaus eine sehr hohe Eigenfrequenz und beeinflussen deshalb das zu messende System kaum.

Aus dem Dokument WO 2019/144172 A1 ist eine Messvorrichtung zur Bestimmung einer Kraft und/oder eines Drehmoments an einer Drehmoment-übertragenden Welle, welche durch eine Lagervorrichtung, insbesondere eine Maschine, deren Aus- und/oder Eingangswelle durch die Drehmomentübertragung in der Welle gebildet ist, gelagert ist, bekannt, wobei die Messvorrichtung wenigstens zwei, vorzugsweise drei oder vier, Piezoelemente und eine Fixierungseinrichtung aufweist, wobei die Fixierungseinrichtung die Piezoelemente trägt und in der Weise ausgebildet ist, dass mittels der Piezoelemente eine Kraft, insbesondere Scherkraft, zwischen der Lagervorrichtung und einer Abstützvorrichtung zum Abstützen der Lagervorrichtung messbar ist. In der Schrift OHZEKI H ET AL: "DEVELOPMENT OF A MAGNETOSTRICTIVE TORQUE SENSOR FOR MILLING PROCESSMONITORING",TRANSACTIONS OF THE AMERICAN SOCIETY OF MECHANICAL ENGINEERS,SERIES B: JOURNAL OF ENGINEERING FOR INDUSTRY, ASME. NEW YORK, US, Bd. 121, Nr. 4, 1. November 1999 (1999-11-01), Seiten 615-622, ISSN: 0022-0817 wird ein magnetostriktiver Drehmomentsensor zur Überwachung des Schneidmoments eines Vorgangs offenbart. Dabei wird die Genauigkeit des Systems durch statische und dynamische Tests mit einem piezoelektrischen Dynamometer evaluiert.

Die Erfindung hat zur Aufgabe, ein Messspektrum einer Messvorrichtung zur Messung eines Drehmoments mit einem piezoelektrischen Drehmomentsensor zu erweitern. Insbesondere ist es eine Aufgabe der Erfindung, ein Verfahren zum Justieren eines piezoelektrischen Drehmomentsensors einer Messvorrichtung für einen niedrigen Frequenzbereich einer Drehmomentschwingung und einen Prüfstand bereitzustellen, mittels welchen ein solches Justieren durchgeführt werden kann.

Diese Aufgabe wird durch die Lehre der unabhängigen Ansprüche gelöst. Vorteilhafte Ausgestaltungen werden in den Unteransprüchen beansprucht.

Ein erster Aspekt der Erfindung betrifft ein Verfahren zum Justieren eines piezoelektrischen Drehmomentsensors einer Messvorrichtung, welche vorzugsweise Teil eines Prüfstands ist, zum Bestimmen eines Drehmoments, welches aufgrund eines Kraftflusses an einem Prüfling anliegt, wobei die Messvorrichtung einen piezoelektrischen Drehmomentsensor und einen, auf einem anderen Messprinzip beruhenden, zweiten Drehmomentsensor, welcher in der Weise ausgelegt ist, um statische Drehmomente kontinuierlich zu erfassen, aufweist, wobei die Messvorrichtung in der Weise eingerichtet ist, dass beide Drehmomentsensoren Drehmomente in dem Kraftfluss messen, wobei ein Soll-Messsignal des piezoelektrischen Drehmomentsensors auf der Grundlage einer Drehmomentmessung durch den zweiten Drehmomentsensor ermittelt wird, und wobei das erfasste Messsignal des piezoelektrischen Drehmomentsensors auf der Grundlage des ermittelten Soll-Messsignals justiert und ausgegeben wird.

Ein zweiter Aspekt der Erfindung betrifft einen Prüfstand für Maschinen, vorzugsweise Elektromaschinen, zum Messen von dynamischen Drehmomenten, wobei der Prüfstand einen piezoelektrischen Drehmomentsensor und einen auf einem anderen Messprinzip beruhenden zweiten Drehmomentsensor, welcher in der Weise ausgelegt ist, um einen statischen Anteil der Drehmomente kontinuierlich zu erfassen, aufweist, wobei beide Drehmomentsensoren in der Weise eingerichtet und an dem Prüfstand angeordnet sind, um Drehmomente in einem Kraftfluss auf dem Prüfstand zu messen.

Ein dritter Aspekt der Erfindung betrifft eine Messvorrichtung für Maschinen, vorzugsweise Elektromaschinen, zum Messen von dynamischen Drehmomenten, wobei die Messvorrichtung einen piezoelektrischen Drehmomentsensor und einen auf einem anderen Messprinzip beruhenden zweiten Drehmomentsensor, welcher in der Weise ausgelegt ist, um einen statischen Anteil der Drehmomente kontinuierlich zu erfassen, aufweist, wobei beide Drehmomentsensoren in der Weise eingerichtet und angeordnet sind, um Drehmomente in einem einzigen Kraftfluss zu messen.

Vorzugsweise ist die Messvorrichtung und/oder der Prüfstand dazu vorgesehen, Prüflinge bei hohen Drehzahlen von mehr als etwa 10.000 U/min, bevorzugt mehr als etwa 35.000 U/min und am bevorzugtesten von mehr als etwa 100.000 U/min zu testen.

Ein Messspektrum im Sinne der Erfindung ist vorzugsweise jener Frequenzbereich, in welchem mit einer Messvorrichtung sinnvolle Messungen durchgeführt werden können.

Ein Prüfling im Sinne der Erfindung ist vorzugsweise eine zu prüfende Maschine oder eine Gesamtheit aus einer zu prüfenden Maschine und einer Welle und/oder eines Wellenstrangs. Vorzugsweise sind die einzelnen Elemente eines Prüflings drehfest miteinander verbunden.

Ein Justieren im Sinne der Erfindung ist vorzugsweise ein Einstellen oder Korrigieren eines von einer Messvorrichtung angezeigten Messwerts auf eine kleinstmögliche Abweichung zu einem Bezugswert eines Referenzgeräts, welcher einen Sollwert bildet. Im Allgemeinen wird eine Messvorrichtung justiert, wenn bei einer Kalibrierung eine Messabweichung zwischen dem Anzeigewert einer Messung der Messvorrichtung und dem des Referenzgerätes unzulässig hoch ist. Bei dem erfindungsgemäßen Justieren wird insbesondere eine Drift des Signals des einen piezoelektrischen Drehmomentsensors mit Hilfe des Signals eines Sensors, welcher eingerichtet ist, um statische Drehmomente kontinuierlich zu erfassen, korrigiert. Weitere Abweichungen, welche beispielsweise durch andere Effekte in anderen als dem beim Justieren betrachteten Frequenzbereich einer Schwingungsfrequenz hervorgerufen werden, werden durch das erfindungsgemäße Justieren vorzugsweise nicht erfasst.

Ein Kraftfluss im Sinne der Erfindung ist ein Weg einer Kraft und/oder eines Drehmoments in einem mechanischen System von einem Angriffspunkt, insbesondere einer Stelle der Einleitung, bis zu einer Stelle oder mehreren Stellen, an der oder denen die Kraft und/oder das Drehmoment durch eine Reaktionskraft und/oder ein Reaktionsmoment aufgenommen werden.

Vorzugsweise setzt sich der Kraftfluss aus einer Kraft, insbesondere einer Querkraft zur Drehrichtung der Welle, und einem Drehmoment, insbesondere um die Drehachse, zusammen.

Ein Leistungsfluss im Sinne der Erfindung ist ein Weg einer Übertragung von Leistung in einem mechanischen System von einer Stelle der Einleitung bis zu einer Stelle oder mehreren Stellen, an welchen die Leistung abgenommen wird.

Ein quasistationärer Frequenzbereich im Sinne der Erfindung weist vorzugsweise eine Schwingungsfrequenz auf, bei welcher Messungen durch beide Drehmomentsensoren jeweils in Gleichgewichtszustand der Drehmomentsensoren durchgeführt werden können. Insbesondere sind keine wesentlichen Messunterschiede aufgrund von Schwingungen am Prüfstand in einem solchen Gleichgewichtszustand an den einzelnen Messpositionen vorhanden und eine Reaktionszeit des zweiten Drehmomentsensors ist in Bezug auf eine Veränderungsgeschwindigkeit des Drehmoments vergleichsweise klein. Auch tritt in einem solchen Zustand, im Gegensatz zu Messungen bei höheren Frequenzen, eine Drift der Messung des piezoelektrischen Drehmomentsensors auf.

Ein Mittel im Sinne der Erfindung kann hard- und/oder softwaretechnisch ausgebildet sein und insbesondere eine, vorzugsweise mit einem Speicher- oder Bussystem daten- bzw. signalverbundene, insbesondere digitale, Verarbeitungseinheit, insbesondere Mikroprozessor-Einheit (CPU) und/oder ein oder mehrere Programme oder Programm-Module aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus zu geben. Ein Speichersystem kann ein oder mehrere, insbesondere verschiedene, Speichermedien, insbesondere verschiedene Speichermedien, insbesondere optische, magnetische, Festkörper und/oder andere nicht-flüchtige Medien, aufweisen. Das Programm kann derart beschaffen sein, dass es die hier beschriebenen Verfahren verkörpert bzw. auszuführen imstande ist und dass die CPU die Schritte solcher Verfahren ausführt.

Ein Messflansch im Sinne der Erfindung ist vorzugsweise ein Drehmomentsensor, welcher zwei Flansche aufweist, zwischen welchen ein anliegendes Drehmoment gemessen werden kann.

Die Erfindung basiert auf der Erkenntnis, dass es bei Einhaltung eines ausreichenden Abstandes zu möglichen Eigenschwingungs- bzw. Resonanzmoden einer Prüfstandsanordnung möglich ist, eine Justierung eines piezoelektrischen Drehmomentsensors mittels eines zweiten Drehmomentsensors vorzunehmen, welcher in demselben Kraftfluss wie der piezoelektrische Drehmomentsensor angeordnet ist.

Mittels des zweiten Drehmomentsensors wird hierbei in dem Kraftfluss, in welchem auch der piezoelektrische Drehmomentsensor das Drehmoment misst, ein Referenzsignal gemessen. Auf der Grundlage dieses Referenzsignals wird das Soll-Messsignal des piezoelektrischen Drehmomentsensors berechnet. Mittels diesem Soll-Messsignal kann eine Justierung des Messsignals des piezoelektrischen Drehmomentsensors vorgenommen werden. Dieses mittels der Justierung korrigierte Messsignal kann dann an einen Nutzer oder über eine Datenschnittstelle zur weiteren Datenverarbeitung ausgegeben werden.

Mit dem piezoelektrische Drehmomentsensor kann der dynamische Anteil der Drehmomente mit hoher Genauigkeit gemessen werden. Beim niederfrequenten Anteil der Drehmomente kommt dagegen eine vergleichsweise große Signaldrift der Piezoelemente zum Tragen, so dass der piezoelektrische Drehmomentsensor diesen Anteil nur fehlerhaft erfassen kann. Der zweite Drehmomentsensor hingegen misst einen statischen Anteil der Drehmomente bei den niederfrequenten Drehmomenten, kann aber den hochfrequenten Signalanteil nicht abbilden. Niederfrequente Betriebsbedingungen sind insbesondere dann gegeben, wenn der Prüfling eine Schwingungsfrequenz von weniger als 10 Hz aufweist. Im Allgemeinen haben Prüfstände eine Eigenschwingung im Bereich 50 Hz bis 80 Hz. Ein Justieren sollte daher bei einer Schwingungsfrequenz von nicht mehr als 10 Hz erfolgen, um eine Einfluss der Eigenschwingungen auszuschließen zu können.

Mittels der erfindungsgemäßen Messvorrichtung kann eine solche Justierung bzw. Nachjustierung für den piezoelektrischen Drehmomentsensor regelmäßig oder kontinuierlich durchgeführt werden, um auch Drehmomente bei Frequenzen von weniger als 1 Hz exakt messen zu können. Somit können durch die Erfindung auch stationäre Kräfte bzw. Drehmomente gemessen werden.

Mithin kann das Messspektrum des piezoelektrischen Drehmomentsensors durch die Erfindung in den niederfrequenten Schwingungsbereich, insbesondere bis in den statischen Bereich, erweitert werden.

In einer vorteilhaften Ausgestaltung des Verfahrens wird das Soll-Messsignal des piezoelektrischen Drehmomentsensors des Weiteren auf der Grundlage einer Drehzahlmessung der Welle ermittelt. Durch die Berücksichtigung der Drehzahl der Welle können verschiedene Trägheitsmomente in verschiedenen Teilen eines Antriebsstrangs bzw. eines Prüflings beim Justieren berücksichtigt werden.

In einer weiteren vorteilhaften Ausgestaltung des Verfahrens wird das Soll-Messsignal des piezoelektrischen Drehmomentsensors mittels der nachfolgenden Gleichung ermittelt:

$$M_{Piezo\_cal} = M_W - (J_W + J_{UUT})\,\dot\omega_W - M_R$$

wobei

$M_{Piezo\_cal}$ das Soll-Messsignal,
$M_W$ das mittels des zweiten Drehmomentsensors an einer Welle oder an einem Wellenstrang, welche/welcher mit dem Prüfling drehfest verbunden sind oder Bestandteil des Prüflings sind, gemessene Drehmoment,
$J_W$ ein Trägheitsmoment einer Welle oder eines Wellenstrangs, welche/welcher mit dem Prüfling (5) drehfest verbunden sind oder Bestandteil des Prüflings (5) sind,
$J_{UUT}$ ein Trägheitsmoment des Prüflings,
$\dot\omega_W$ eine zeitliche Ableitung einer gemessenen Drehzahl einer Welle (10a, 10b, 10c) oder eines Wellenstrangs, welche/welcher mit dem Prüfling drehfest verbunden sind oder Bestandteil des Prüflings sind, und
$M_R$ ein Reibmoment, welches insbesondere durch Lager und/oder ein Getriebe verursacht wird, sind.

Die Erfinder haben erkannt, dass mittels dieser vergleichsweise einfachen Gleichung, welche insbesondere Grundlage für ein Modell bildet, ein zuverlässiger Wert des Soll-Messsignals des piezoelektrischen Drehmomentsensors ermittelt werden kann, welcher eine große Übereinstimmung mit dem tatsächlichen Wert des Drehmoments an der Messstelle aufweist.

In einer weiteren vorteilhaften Ausgestaltung des Verfahrens wird auf der Grundlage von erfassten Messsignalen und zum gleichen Zeitpunkt ermittelten Soll-Messsignalen ein Modell einer Regelstrecke Messsignal - Soll-Messsignal erzeugt, wobei das erfasste Messsignal nach Erzeugung des Modells mittels des Modells justiert wird. Das Erzeugen eines Modells erlaubt es, drehzahlabhängig ohne weitere Messungen zu justieren

In einer weiteren vorteilhaften Ausgestaltung des Verfahrens basiert das Modell auf einer Übertragungsfunktion, deren Parameter durch Prüfstandsversuche an dem Prüfling ermittelt werden, indem ein mittels des piezoelektrischen Drehmomentsensors erfasstes Messsignal mit einem Soll-Messsignal, welches auf der Grundlage einer Drehmomentmessung mittels des zweiten Drehmomentsensors ermittelt wird, verglichen wird. Hierdurch wird eine einfache Justierung erreicht.

In einer weiteren vorteilhaften Ausgestaltung des Verfahrens misst der piezoelektrische Drehmomentsensor ein Reaktionsmoment an wenigstens einer Abstützstelle des Prüflings, um das entsprechende anliegende Drehmoment zu ermitteln. Entsprechend ist der piezoelektrische Drehmomentsensor in einer vorteilhaften Ausgestaltung des Prüfstands in der Weise ausgebildet und angeordnet, dass der Kraftfluss zwischen einem Prüfling und einer Abstützvorrichtung zum Abstützen des Prüflings messbar ist. Auch hier wird letztendlich das Reaktionsmoment, mittels welchem der Prüfling abgestützt wird, bestimmt. Durch das Mitteln eines Drehmoments an einem Prüfling auf der Grundlage eines Reaktionsmoments wird keine Messung an rotierenden Elementen eines Prüflings benötigt, um ein Drehmoment zu bestimmen. Hierdurch kann verhindert werden, dass durch etwaige Messvorrichtungen an den drehenden Elementen, beispielsweise eines Messflanschs, das Trägheitsmoment einer Messanordnung verändert wird oder auch Elastizitäten in eine Messanordnung eingeführt werden.

Die im Vorhergehenden in Bezug auf den ersten Aspekt der Erfindung beschriebenen Vorteile und Merkmale gelten entsprechend für den zweiten Aspekt der Erfindung und umgekehrt.

In einer vorteilhaften Ausgestaltung weist der Prüfstand eine Belastungsvorrichtung auf, insbesondere ein Dynamometer oder eine Bremse, zum Aufbringen auf einer Last auf einen Prüfling. Durch die Verwendung eines Dynamometers können dynamische Messungen am Prüfstand durchgeführt werden.

In einer weiteren vorteilhaften Ausgestaltung weist der Prüfstand ein Getriebe auf, insbesondere Hochtreibgetriebe, welches im Kraftfluss zwischen der Belastungsvorrichtung und dem Prüfling angeordnet ist, wobei der piezoelektrische Drehmomentsensor in der Weise angeordnet ist, um die Drehmomente auf jener Seite des Kraftflusses in Bezug auf das Getriebe zu erfassen, auf welche der Prüfling anordenbar ist, und der zweite Drehmomentsensor in der Weise angeordnet ist, um die Drehmomente auf jener Seite des Kraftflusses in Bezug auf das Getriebe zu erfassen, auf welche die Belastungsvorrichtung angeordnet ist.

Insbesondere bei einer Prüfstandsanordnung mit einem Getriebe ist die Erfindung besonders vorteilhaft, da auf jener Seite des Kraftflusses, welche mit der hohen Drehzahl dreht, vorzugsweise der piezoelektrische Drehmomentsensor angeordnet ist. Hier können die durch das Getriebe erzeugten hochfrequenten Schwingungen mittels des piezoelektrischen Drehmomentsensors bestimmt werden. Der zweite Drehmomentsensor anderer Bauart, insbesondere basierend auf einer Dehnungsmessstreifenanordnung, misst hingegen Drehmomente auf jener Seite des Getriebes, welche mit niedrigerer Drehzahl rotiert. Hierdurch können Messungen bei niedriger Schwingungsfrequenz des Drehmoments, sogenannten quasi-stationäre Messungen, oder auch stationären Messungen durchgeführt werden. Insbesondere wird der Kraftfluss von einem niedrig dynamischen Kraftfluss in einen hochdynamischen Kraftfluss gewandelt. Der niederfrequente Anteil der Drehmomentschwingungen wird über diese Wandlung transformiert. Insbesondere ist eine Anordnung des zweiten Drehmomentsensors auf der Seite des Getriebes, welche mit höherer Drehzahl dreht, von Nachteil, da Drehmomente mit hohen Schwingungsfrequenzen mittels eines solchen zweiten Drehmomentsensors, welcher nicht auf dem piezoelektrischen Messprinzip beruht, nicht bestimmt werden können. Insbesondere gilt aber auch für die Zusammenhänge zwischen einem durch den zweiten Drehmomentsensor gemessenen Drehmoment und dem Soll-Messsignal des piezoelektrischen Drehmomentsensors die Gleichung, wie sie weiter oben dargestellt ist.

In einer weiteren vorteilhaften Ausgestaltung des Verfahrens weist der Wellenstrang ein Getriebe auf, wobei der zweite Drehmomentsensor in dem mit niedrigerer Drehzahl rotierenden Abschnitt in Bezug auf das Getriebe angeordnet ist, und der piezoelektrische Drehmomentsensor in dem mit höherer Drehzahl rotierenden Abschnitt in Bezug auf das Getriebe angeordnet ist. Die Erfindung ist in Bezug auf diese Ausgestaltung besonders vorteilhaft, da in dem Abschnitt mit höherer Drehzahl des Wellenstrangs Drehmomentschwingungen, welche dort mit sehr hoher Schwingungsfrequenz auftreten, gut durch den piezoelektrischen Drehmomentsensor bestimmt werden können.

In einer weiteren vorteilhaften Ausgestaltung weist der Prüfstand einen Drehzahlsensor auf, eingerichtet und angeordnet zum Messen einer Drehzahl in Bezug auf einen Prüfling.

In einer weiteren vorteilhaften Ausgestaltung des Prüfstands bildet das Getriebe mit wenigstens einer Welle einen Wellenstrang, und der Drehzahlsensor ist in der Weise angeordnet, um die Drehzahl auf jener Seite des Wellenstrangs in Bezug auf das Getriebe zu erfassen, auf welcher die Belastungsvorrichtung angeordnet ist.

In einer weiteren vorteilhaften Ausgestaltung des Prüfstands beruht das Messprinzip des zweiten Drehmomentsensors auf Dehnungsmessstreifen, und der zweite Drehmomentsensor ist vorzugsweise ein Messflansch. Drehmomentsensoren auf der Basis von Dehnungsmessstreifen eignen sich besonders gut zur stationären und quasi-stationären oder niederfrequenten Messung von Drehmomenten bzw. diesen zugrundeliegenden Kräften.

In einer weiteren vorteilhaften Ausgestaltung werden der Prüfling und die Belastungsvorrichtung und, soweit vorhanden, das Getriebe auf derselben Basis abgestützt.

In einer weiteren vorteilhaften Ausgestaltung weist der Prüfstand Justiermittel zum laufenden Justieren des piezoelektrischen Drehmomentsensors auf, wobei die von dem piezoelektrischen Drehmomentsensor erfassten Drehmomente von dem Justiermittel mittels eines Modells justiert werden.

Weitere Merkmale und Vorteile ergeben sich aus der nachfolgenden Beschreibung der Ausführungsbeispiele in Bezug auf die Figuren. Es zeigen wenigstens teilweise schematisch:

**Fig. 1**      ein Ausführungsbeispiel eines Prüfstands mit einem piezoelektrischen Drehmomentsensor und einem zweiten Drehmomentsensor;

**Fig. 2**      ein Blockdiagramm eines Verfahrens zum Justieren eines piezoelektrischen Drehmoments; und

**Fig. 3**      ein Ausführungsbeispiel einer Regelstrecke zum Justieren eines Messsignals eines piezoelektrischen Drehmomentsensors.

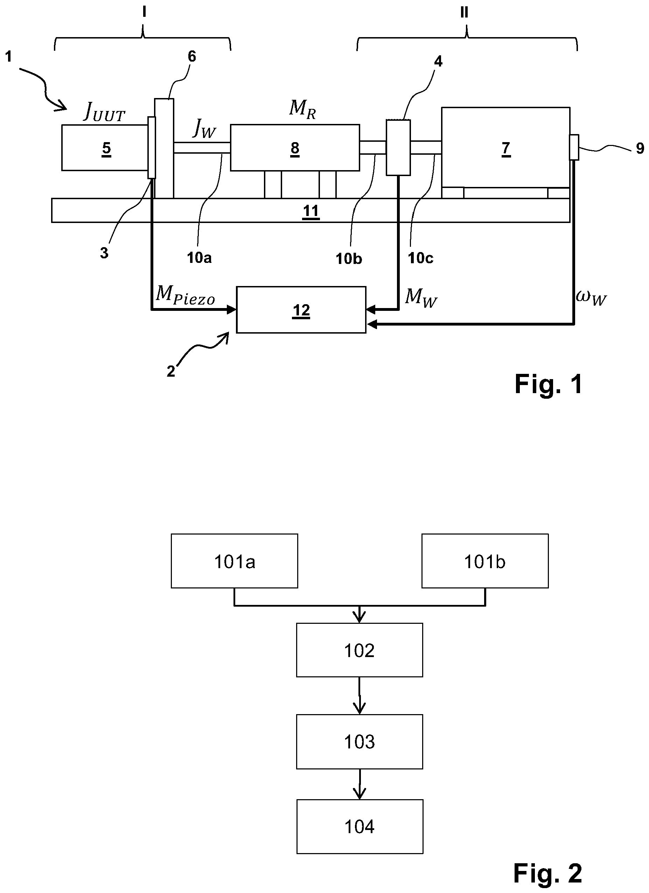

**Fig. 1** zeigt ein Ausführungsbeispiel eines Prüfstands 1 zum Testen von Maschinen.

Im Nachfolgenden wird die Erfindung anhand eines Prüfstands 1 zum Testen einer Elektromaschine 5 erläutert. Es ist für den Fachmann jedoch offensichtlich, dass die beschriebenen Ausführungsbeispiele auch für andere Arten von Maschinen, insbesondere elektromechanische Energiewandler oder chemisch-mechanische Energiewandler anwendbar sind.

Der Prüfstand 1 weist vorzugsweise ein Dynamometer 7 auf, mit welchem eine Last bereitgestellt werden kann, mit welcher die zu testende Elektromaschine beaufschlagt werden kann, insbesondere ein Antriebsmoment oder ein Bremsmoment.

Der gezeigte Prüfstand 1 dient vorzugsweise zum Testen von solchen Elektromaschinen, welche im Regelbetrieb mit vergleichsweise hohen Drehzahlen von mehr als 10.000 min⁻¹, bevorzugt mehr als 35.000 min⁻¹, und am bevorzugtesten von mehr als 100.000 min⁻¹, betrieben werden. Dies sind beispielsweise elektrische Antriebe von Verdichtern, wie beispielsweise Turboladern, oder auch elektrische Antriebsmotoren für Elektrofahrzeuge. Solche hohen Drehzahlen können von einem Dynamometer 7 nicht bereitgestellt werden bzw. nicht von einem solchen aufgenommen werden. Daher weist der Prüfstand 1 vorzugsweise ein Getriebe 8 auf, insbesondere in sogenanntes Hochtreibgetriebe, welches eine Drehzahl, die an den Wellenabschnitten 10b, 10c, welche das Dynamometer 7 mit dem Hochtreibgetriebe 8 drehfest verbinden, zu einer höheren Drehzahl wandelt. Diese höhere, gewandelte Drehzahl wird über den Wellenabschnitt 10a, welcher das Hochtreibgetriebe 8 und die zu prüfende Elektromaschine 5 drehfest verbindet, an die zu testende Elektromaschine 5 übertragen. Umgekehrt wird eine von der zu testenden Elektromaschine 5 bereitgestellte Drehzahl über das Hochtreibergetriebe 8 in einen Drehzahl- und Drehmomentbereich gewandelt, in welchem das Dynamometer 7 betrieben werden kann.

Das Getriebe 8 bildet zusammen mit verschiedenen Wellen bzw. Abschnitten einer Welle 10a, 10b, 10c einen Wellenstrang. Ein Prüfling wird durch die Elektromaschine 5 allein oder die Elektromaschine 5 und wenigstens teilweise den Wellenstrang gebildet, je nachdem, welche Komponenten getestet werden sollen.

Wie in Fig. 1 dargestellt, sind das Dynamometer 7, das Hochtreibergetriebe 8 sowie die zu testende Elektromaschine 5 auf derselben Basis 11 gelagert. Die zu testende Elektromaschine 5 wird hierbei durch eine Abstützvorrichtung 6 gegenüber der Basis 11 abgestützt. Die Abstützvorrichtung 6 stellt hierbei jene Reaktionskräfte für die zu testende Elektromaschine 5 bereit, mittels welcher ein Kraftfluss und Leistungsfluss zwischen der zu testenden elektrischen Maschine 5 und dem Dynamometer 7 abgestützt wird.

Vorzugsweise ist die Abstützvorrichtung 6 dabei in der Weise ausgebildet, wie in Fig. 1 gezeigt, dass die zu testende elektrische Maschine 5 an jener Seite, insbesondere Stirnseite, gelagert werden kann, an welcher eine Welle der Elektromaschine 5 angeordnet ist bzw. an welcher der Wellenabschnitt 10a mit der Welle der Elektromaschine gekoppelt werden kann. Diese Anordnung bietet den Vorteil, dass, wie in Fig. 1 gezeigt, der Drehmomentsensor 3 in der Weise zwischen der Abstützvorrichtung 6 und der zu testenden Elektromaschine 5 angeordnet werden kann, dass ein Großteil des auf die zu testende Elektromaschine 5 wirkenden Drehmoments an dem piezoelektrischen Drehmomentsensor 3 anliegt. Insbesondere kann durch diese Anordnung ein Kraftnebenschluss, welcher nicht über den piezoelektrischen Drehmomentsensor 3 verläuft, minimiert oder sogar beseitigt werden. Vorzugsweise weist für diese Art der Lagerung der zu testenden Elektromaschine 5 durch den piezoelektrischen Drehmomentsensor 3 und die Abstützvorrichtung 6 sowohl der piezoelektrische Drehmomentsensor 3 als auch die Abstützvorrichtung 6 eine Durchführung für die Welle der zu testenden Elektromaschine 5 bzw. für die Welle oder den Wellenabschnitt 10a auf. Diese Durchführung ist vorzugsweise als Loch ausgebildet.

Die zu testende Elektromaschine 5 kann aber auch auf andere Art gelagert werden, beispielsweise an jener Seite, welche der Basis 11 zugewandt ist, oder auch auf jener Seite, welche der Basis abgewandt ist, in einer Art hängenden Lagerung, oder auch an den anderen Seitenflächen der zu testenden Elektromaschine 5. Details zu der in Fig. 1 gezeigten Lagerung der zu testenden Elektromaschine 5 und weiterer Möglichkeiten der Lagerung sowie zur Bestimmung der Reaktionskräfte mittels des piezoelektrischen Drehmomentsensors 3 können dem eingangs Dokument WO 2019/144172 A1 entnommen werden.

Durch das Hochtreibgetriebe 8 wird die Prüfstandsanordnung des Prüfstands 1 in zwei Seiten I, II unterteilt. Auf einer ersten Seite I, auf welcher die zu testende Elektromaschine 5 angeordnet ist, rotiert der Wellenstrang mit höherer Drehzahl, wobei ein niedrigeres Drehmoment an dem Wellenstrang anliegt. Dieser Abschnitt des Wellenstrangs wird in der vorliegenden Beschreibung daher auch als erster Abschnitt I des Wellenstrangs bezeichnet.

Auf der Seite des anderen Ausgangs des Hochtreibgetriebes 8, als zweite Seite II bezeichnet, drehen die Wellenabschnitte 10b, 10c mit niedrigerer Drehzahl und höherem anliegenden Drehmoment. Typischerweise liegt das Übersetzungsverhältnis des Hochtreibgetriebes 8 bei etwa 3:1 bis 10:1. Dieser Abschnitt des Wellenstrangs wird in der vorliegenden Beschreibung daher auch als erster Abschnitt II des Wellenstrangs bezeichnet.

Bei dem Wellenstrang bzw. Antriebsstrang, welcher vorzugsweise aus dem Elektromotor 5, den Wellenabschnitten 10a, 10b, 10c, Hochtreibgetriebe 8 und dem Dynamometer 7 besteht, handelt es sich um ein schwingungsfähiges System. Resonanz oder Eigenmoden für Schwingungen liegen, je nach Ausgestaltung des Prüfstands 1 und der zu testenden Elektromaschine 5, typischerweise bei mehr als 50 Hz.

Um das auf die zu testende Elektromaschine aufgrund einer Kraftflusses von oder zu dem Dynamometer 7 wirkende Drehmoment zu bestimmen, weist der Prüfstand 1 den piezoelektrischen Drehmomentsensor 3 auf. Dieser Drehmomentsensor 3 bestimmt dabei vorzugsweise nicht direkt das Drehmoment, welches über den Wellenabschnitt 10a an der zu testenden Elektromaschine 5 anliegt, sondern indirekt das Reaktionsmoment, mit welchem die zu testende Elektromaschine 5 an der Abstützvorrichtung 6 abgestützt wird. Des Weiteren weist der Prüfstand 1 einen zweiten Drehmomentsensor 4 auf, welcher nicht auf dem piezoelektrischen Messprinzip beruht, sondern das Drehmoment mittels eines anderen Messprinzips misst. Vorzugsweise kommen hierbei sogenannte Dehnungsmessstreifen zum Einsatz, wie sie aus dem Stand der Technik allgemein bekannt sind. Vorzugsweise ist der zweite Drehmomentsensor 4 als Messflansch ausgebildet, welcher das Drehmoment zwischen den beiden Wellenabschnitten 10b und 10c misst.

Die in Fig. 1 gezeigte Anordnung der beiden Drehmomentsensoren ist für die Justierung des piezoelektrischen Drehmomentsensors 3 besonders vorteilhaft, da in dem zweiten Abschnitt II des Wellenstrangs, welcher mit niedrigerer Drehzahl rotiert, im Allgemeinen geringere Schwingungen auftreten und mithin eine Messung mittels des zweiten Drehmomentsensors 4, welcher Dehnungsmessstreifen einsetzt, präzise ist. Sensoren basierend auf Dehnungsmessstreifen eignen sich nämlich nur eingeschränkt für dynamische Messungen.

Der piezoelektrische Drehmomentsensor 3 ist hingegen in dem ersten Abschnitt I des Wellenstrangs angeordnet, direkt an der zu testenden Elektromaschine 5, an welcher das anliegende Drehmoment auch bestimmt werden soll. Durch die unmittelbare Anordnung des piezoelektrischen Drehmomentsensors an dem Prüfling kann eine hohe Genauigkeit der Messung des anliegenden Drehmoments erreicht werden.

Zur Bestimmung der Drehzahl des Wellenstrangs, insbesondere im Bereich des zweiten Abschnitts des Wellenstrangs II, ist ein Drehzahlsensor 9 angeordnet, welcher die Drehzahl bestimmen kann. In Fig. 1 bestimmt der Drehzahlsensor 9 die Drehzahl der Welle des Dynamometers 7 und damit die Drehzahl der Wellenabschnitte 10b und 10c. Über die gewählte Übersetzung des Hochtreibgetriebes 8 kann mithin auch auf eine Drehzahl in dem ersten Abschnitt I des Wellenstrangs geschlossen werden.

Auf der Grundlage des mittels des zweiten Drehmomentsensors 4 gemessenen Drehmoments $M_W$ und des mittels des Drehzahlsensors 9 gemessenen Drehzahl $\omega_W$ kann unter Berücksichtigung des Reibmoments $M_R$, welches insbesondere durch Lager und/oder das Hochtreibgetriebe 8 verursacht wird, das Trägheitsmoment $J_W$ des Wellenstrangs und des Trägheitsmoments $J_{UUT}$ der zu testenden Elektromaschine 5 ein Soll-Messsignal $M_{Piezo\_cal}$ bestimmt werden. Dies wird weiter unten in Bezug auf das erfindungsgemäße Verfahren 100 zum Justieren eines piezoelektrischen Drehmomentsensors näher erläutert.

Gleichzeitig kann mittels des piezoelektrischen Drehmomentsensors 3 ein Ist-Messsignal $M_{Piezo}$ des an dem piezoelektrischen Drehmomentsensor 3 anliegenden Drehmoments gemessen werden.

Um ein Kalibrieren des Ist-Messsignals des piezoelektrischen Drehmomentsensors 3 vorzunehmen, weist der Prüfstand 1 des Weiteren vorzugsweise Justiermittel 12 auf. Diese sind vorzugsweise Teil einer Datenverarbeitungsanlage des Prüfstands 1, können aber auch Teil einer externen Datenverarbeitungsanlage sein. Nachdem das Ist-Drehmomentsignal $M_{Piezo}$ kalibriert wurde, kann der piezoelektrische Drehmomentsensor 3 durch die Justiermittel 12 justiert werden. Vorzugsweise kommt zum Kalibrieren bzw. Justieren hierbei ein Modell zum Einsatz, welches in den Justiermitteln 12 hinterlegt ist. Auch dieses Modell wird weiter unten in Bezug auf das Verfahren 100 näher erläutert.

Fig. 2 zeigt ein Blockdiagramm eines Ausführungsbeispiels eines Verfahrens 100 zum Justieren eines piezoelektrischen Drehmomentsensors einer Messvorrichtung 2. Vorzugsweise ist eine solche Messvorrichtung 2 Teil eines Prüfstands 1, wie er im Vorhergehenden in Bezug auf Fig. 1 beschrieben wurde.

Das Justieren des piezoelektrischen Drehmomentsensors 3 erfolgt im laufenden Prüfstandsbetrieb. Hierfür wird mittels der zu testenden elektrischen Maschine 5 ein Drehmoment über den Wellenstrang auf das Dynamometer 7 aufgebracht oder umgekehrt ein Drehmoment von dem Dynamometer 7 auf die zu testende elektrische Maschine 5.

Vorzugsweise wird der Prüfstand 1 beim Justieren bei vergleichsweise niedrigen Drehzahlen des Wellenstrangs betrieben, wobei die Drehzahl in dem zweiten Abschnitt II des Wellenstrangs vorzugsweise weniger als 50 min⁻¹ beträgt. Bei Drehzahlen in diesem Größenbereich ist, je nach Bauart des Prüfstands 1 und des Prüflings, mit kleinen Schwingungsfrequenzen des Drehmoments von weniger als etwa 10 Hz, vorzugsweise weniger als etwa 5 Hz, noch bevorzugter weniger als etwa 1 Hz, zu rechnen.

Diese Frequenzbereiche der Schwingungsfrequenzen sind so gewählt, dass eine Beabstandung zu Resonanzfrequenzen bzw. Eigenmoden des Gesamtsystems aus Prüfstand 1 und Prüfling vorliegt. Die zu Resonanzfrequenzen bzw. Eigenmoden liegen im Allgemeinen bei etwa 50 Hz.

Weiter vorzugsweise werden diese zur Justierung geeigneten Frequenzbereiche der Schwingungsfrequenzen mittels eines Frequenzfilters, insbesondere mittels einer Fourier-Analyse, isoliert. Die Drehzahl während des Prüfstandsbetriebs ist in diesem Fall für das Justieren nicht erheblich.

Während des Betriebs misst der piezoelektrische Drehmomentsensor 3 ein Drehmoment, welches an der zu testenden elektrischen Maschine 5 anliegt 101a. Wie bereits in Bezug auf Fig. 1 erläutert, werden durch den piezoelektrischen Drehmomentsensor 3 hierbei vorzugsweise die Reaktionskräfte, mit welchen die zu testenden Elektromaschine 5 an der Abstützvorrichtung 6 abgestützt wird, erfasst. Der zweite Drehmomentsensor 4 erfasst 101b hingegen ein Drehmoment im Wellenstrang und daher in vergleichsweise weiter Entfernung von der zu testenden Elektromaschine 5. Bei einem Prüfstand 1 oder einem Prüfling, welcher ein Getriebe 8, wie in Fig. 1 gezeigt, aufweist, wird der zweite Drehmomentsensor 4 vorzugsweise in jenem Bereich II des Wellenstrangs angeordnet, in welchem die geringere Drehzahl herrscht.

Auf der Grundlage der Drehmomentmessungen Mw durch den zweiten Drehmomentsensor 4 und der Drehzahlmessung $\omega_W$ durch den Drehzahlsensor 9 wird ein Soll-Messsignal $M_{Piezo\_cal}$ berechnet 102. Vorzugsweise wird das Soll-Messsignal dabei auf der Basis der nachfolgenden Gleichung ermittelt:

$$ M_{Piezo\_cal} = M_W - (J_W + J_{UUT})\,\dot{\omega}_W - M_R $$

Grundsätzlich kann näherungsweise aber auch nur das mittels des zweiten Drehmomentsensors 3 gemessene Drehmoment Mw, gegebenenfalls unter Berücksichtigung eines Reibmoments $M_R$, zur Ermittlung des Soll-Messsignals $M_{Piezo\_cal}$ herangezogen werden.

Auf der Grundlage des ermittelten Soll-Messsignals $M_{Piezo\_cal}$ wird das erfasste Messsignal $M_{Piezo}$ korrigiert 103. Weiter vorzugsweise wird das korrigierte Messsignal ausgegeben 104.

Die Korrektur des durch den piezoelektrischen Drehmomentsensor 3 erfassten Messsignals $M_{Piezo}$ erfolgt vorzugsweise auf der mittels einer Regelstrecke Messsignal/Soll-Messsignal.

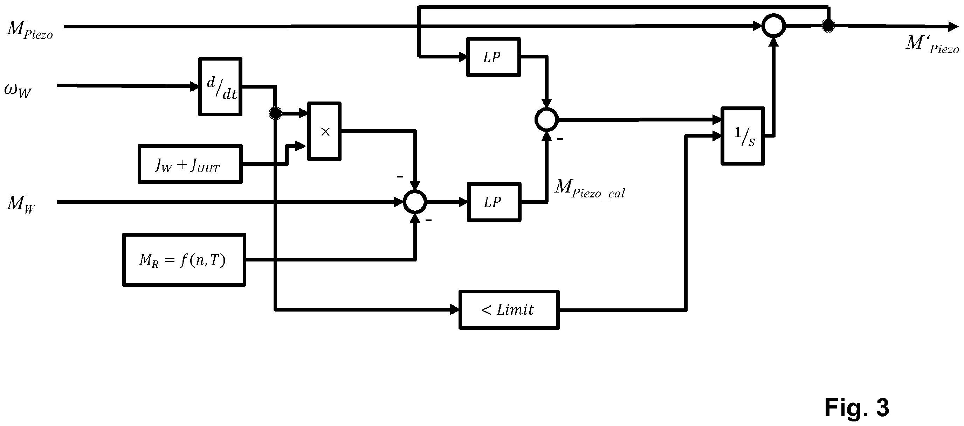

Ein Ausführungsbeispiel einer solchen Regelstrecke ist in **Fig. 3** dargestellt.

Vorzugsweise wird das Messsignal $M_{Piezo}$ korrigiert, indem dieses mit dem Soll-Messsignal $M_{Piezo\_cal}$ verglichen wird. Die auf diese Weise ermittelten Korrekturwerte, welche vorzugsweise bei vergleichsweise geringen Frequenzen von Drehmomentschwingungen ermittelt werden, sind für den gesamten Messbereich, insbesondere auch für höhere Schwingungsfrequenzen des Drehmoments, gültig.

In einer bevorzugten Ausführungsform kann des Weiteren ein Modell erzeugt werden, mittels welchem das Soll-Messsignal $M_{Piezo\_cal}$ in Abhängigkeit von der Schwingungsfrequenz des Drehmoments auf der Grundlage der Messungen des zweiten Drehmomentsensors 4 ermittelt werden kann.

Im Wesentlichen bildet die in Fig. 3 gezeigte Regelstrecke die im Vorhergehenden angegebene Gleichung zur Berechnung des Soll-Messsignals $M_{Piezo\_cal}$ ab.

Die Rotationsgeschwindigkeit der Welle $\omega_W$ wird nach der Zeit abgeleitet und mit der Summe der Trägheitsmomente des Wellenstrangs und der zu testenden Elektromaschine 5 multipliziert. Das Reibmoment $M_R$, welches insbesondere als Funktion der Drehzahl n und einer Übersetzung T vorliegt, und das vorher berechnete Produkt werden von dem mittels des zweiten Drehmomentsensors 4 gemessenen Drehmoments Mw subtrahiert. Das berechnete Signal wird einem Tiefpassfilter LP unterzogen, woraus sich das Soll-Messsignal $M_{Piezo\_cal}$ ergibt. Dieses Soll-Messsignal $M_{Piezo\_cal}$ wird von einem auf der Grundlage einer alten Justierung korrigierten Messsignal $M_{Piezo}$, welches ebenfalls einen Tiefpassfilter LP durchlaufen hat, subtrahiert. Vorzugsweise haben die gezeigten Tiefpassfilter LP dabei die gleiche Charakteristik, insbesondere gleiche Dynamiken, Grenzfrequenzen, Ordnungen und des Typen. Durch das Vorsehen der Tiefpassfilter können jene Schwingungsfrequenzen isoliert werden, welche sich zur Justierung des Messsignals des piezoelektrischen Drehmomentsensor eignen.

Die Differenz wird einem Integrator 1/s zugeführt. Ist die berechnete Beschleunigung der Rotation der Welle geringer als ein Grenzwert Limit, so wird eine vorherige Justierung durch einen neuen Wert in einem Integrator 1 durch S ersetzt und zur Korrektur des durch den piezoelektrischen Drehmomentsensor 3 gemessenen Messsignals $M_{Piezo}$ eingesetzt. Durch die Berücksichtigung eines Grenzwerts Limit für die Beschleunigung der Rotation wird sichergestellt, dass eine Veränderung der Justierung nur bis zu einer gewissen Schwingungsfrequenz vorgenommen wird.

Bei den vorher beschriebenen Ausführungsbeispielen handelt es sich lediglich um Beispiele, die den Schutzbereich und die Anwendung und den Aufbau in keiner Weise einschränken sollen. Vielmehr wird dem Fachmann durch die vorausgehende Beschreibung ein Leitfaden für die Umsetzung mindestens eines Ausführungsbeispiels gegeben, wobei diverse Änderungen, insbesondere im Hinblick auf die Funktion und die Anordnung der beschriebenen Bestandteile, vorgenommen werden können, ohne den Schutzbereich zu verlassen, wie er sich aus den Ansprüchen ergibt.

**Bezugszeichenliste**

| | |
|---|---|
| 1 | Prüfstand |
| 2 | Messvorrichtung |
| 3 | Piezoelektrischer Drehmomentsensor |
| 4 | Zweiter Drehmomentsensor |
| 5 | Elektromaschine |
| 6 | Abstützvorrichtung |
| 7 | Dynamometer |
| 8 | Getriebe |

| 9 | Drehzahlsensor |
| 10a, 10b, 10c | Welle |
| 11 | Basis |
| 12 | Justiermittel |

## Patentansprüche

1. Verfahren (100) zum Justieren eines piezoelektrischen Drehmomentsensors (3) einer Messvorrichtung (2), welche vorzugsweise Teil eines Prüfstands (1) ist, insbesondere nach einem der Ansprüche 11 bis 15, zum Bestimmen eines Drehmoments, welches aufgrund eines Kraftflusses an einem Prüfling (5) anliegt, wobei die Messvorrichtung (2) einen piezoelektrischen Drehmomentsensor (3) und einen, auf einem anderen Messprinzip beruhenden, zweiten Drehmomentsensor (4), welcher in der Weise ausgelegt ist, um statische Drehmomente kontinuierlich zu erfassen, aufweist, wobei die Messvorrichtung (2) in der Weise eingerichtet ist, dass beide Drehmomentsensoren Drehmomente in dem Kraftfluss messen (101a, 101b), wobei ein Soll-Messsignal des piezoelektrischen Drehmomentsensors (3) auf der Grundlage einer Drehmomentmessung durch den zweiten Drehmomentsensor (4) ermittelt wird (102), und wobei das erfasste Messsignal des piezoelektrischen Drehmomentsensors auf der Grundlage des ermittelten Soll-Messsignals justiert (103) und ausgegeben wird (104).

2. Verfahren (100) nach Anspruch 1, wobei das Ermitteln des Soll-Messsignals des piezoelektrischen Drehmomentsensors (3) in einem quasistationären Frequenzbereich einer Schwingungsfrequenz des Drehmoments an der Messvorrichtung vorgenommen wird, insbesondere in einem Frequenzbereich unterhalb von 50Hz, vorzugsweise zwischen etwa 5Hz und etwa 50Hz.

3. Verfahren (100) nach Anspruch 1 oder 2, wobei das Ermitteln des Soll-Messsignals des piezoelektrischen Drehmomentsensors (3) in einem Frequenzbereich einer Schwingungsfrequenz des Drehmoments vorgenommen wird, in welchem keine Eigenschwingungs- bzw. Resonanzmoden in einer Messumgebung, insbesondere auf dem Prüfstand (1), auftreten, vorzugsweise bei Schwingungsfrequenz des Drehmoments von weniger als etwa 20Hz, vorzugsweise weniger als etwa 10 Hz.

4. Verfahren (100) nach Anspruch 2 oder 3, wobei das Justieren im laufenden Betrieb des Prüflings (5) vorgenommen wird, wobei ein Drehmoment in dem gewünschten Frequenzbereich mittels eines Frequenzfilters, insbesondere mittels einer Fourier-Analyse, isoliert wird.

5. Verfahren (100) nach einem der vorhergehenden Ansprüche 1 bis 4, wobei das Soll-Messsignal des piezoelektrischen Drehmomentsensors (3) des Weiteren auf der Grundlage einer Drehzahlmessung in Bezug auf den Prüfling ermittelt wird.

6. Verfahren (100) einem der vorhergehenden Ansprüche 1 bis 5, wobei das Soll-Messsignal des piezoelektrischen Drehmomentsensors (3) mittels der nachfolgenden Gleichung ermittelt wird:

$$M_{Piezo\_cal} = M_W - (J_W + J_{UUT})\, \dot{\omega}_W - M_R$$

wobei

$M_{Piezo\_cal}$ das Soll-Messsignal,
$M_W$ das mittels des zweiten Drehmomentsensors (3) an einer Welle (10a, 10b, 10c) oder an einem Wellenstrang, welche/welcher mit dem Prüfling (5) drehfest verbunden sind oder Bestandteil des Prüflings (5) sind, gemessene Drehmoment, $J_W$ ein Trägheitsmoment einer Welle (10a, 10b, 10c) oder eines Wellenstrangs, welche/welcher mit dem Prüfling (5) drehfest verbunden sind oder Bestandteil des Prüflings (5) sind,
$J_{UUT}$ ein Trägheitsmoment des Prüflings (5),
$\dot{\omega}_W$ eine zeitliche Ableitung einer gemessenen Drehzahl einer Welle (10a, 10b, 10c) oder eines Wellenstrangs, welche/welcher mit dem Prüfling (5) drehfest verbunden sind oder Bestandteil des Prüflings (5) sind,
$M_R$ ein Reibmoment, welches insbesondere durch Lager und/oder ein Getriebe (8) verursacht wird, sind.

7. Verfahren (100) nach Anspruch 6, wobei der Wellenstrang ein Getriebe (8) aufweist und wobei der zweite Drehmomentsensor (4) in dem mit niedrigerer Drehzahl rotierenden Abschnitt (II) in Bezug auf das Getriebe (8) angeordnet ist und der piezoelektrische Drehmomentsensor (3) in dem mit höherer Drehzahl rotierenden Abschnitt (I) in Bezug auf das Getriebe (8) angeordnet ist.

8. Verfahren (100) nach einem der vorhergehenden Ansprüche 1 bis 7, wobei der piezoelektrische Drehmomentsensor (3) ein Reaktionsmoment an wenigstens einer Abstützstelle des Prüflings (5) misst, um ein an dem Prüfling (5) anliegendes Drehmoment zu ermitteln.

9. Computerprogramm, das Anweisungen umfasst, welche, wenn sie von einem Computer ausgeführt werden, diesen dazu veranlassen, die Schritte eines Verfahrens (100) gemäß einem der vorhergehenden Ansprüche 1 bis 8 auszuführen.

**10.** Computer-lesbares Medium, auf dem ein Computerprogramm nach Anspruch 9 gespeichert ist.

**11.** Prüfstand (1) für Maschinen, vorzugsweise Elektromaschinen, zum Messen von dynamischen Drehmomenten, insbesondere eingerichtet zum Durchführen eines Verfahrens nach einem der Ansprüche 1 bis 10, wobei der Prüfstand (1) einen piezoelektrischen Drehmomentsensor (3), ein Justiermittel (12), das eingerichtet ist, den piezoelektrischen Drehmomentsensor (3) zu justieren und einen auf einem anderen Messprinzip beruhenden zweiten Drehmomentsensor (4)), welcher in der Weise ausgelegt ist, um einen statischen Anteil der Drehmomente kontinuierlich zu erfassen, aufweist, wobei beide Drehmomentsensoren (3, 4) in der Weise eingerichtet und an dem Prüfstand (1) angeordnet sind, um Drehmomente in einem Kraftfluss auf dem Prüfstand (1) zu messen.

**12.** Prüfstand (1) nach Anspruch 11, wobei der piezoelektrische Drehmomentsensor (3) in der Weise ausgebildet und angeordnet ist, dass eine Kraft in dem Kraftfluss zwischen einem Prüfling (5) und einer Abstützvorrichtung (6) zum Abstützen des Prüflings (5) messbar sind.

**13.** Prüfstand (1) nach Anspruch 11 oder 12 mit einer Belastungsvorrichtung (7), insbesondere einem Dynamometer oder einer Bremse, zum Aufbringen einer Last auf einen Prüfling (5).

**14.** Prüfstand (1) nach Anspruch 13 mit einem Getriebe (8), insbesondere einem Hochtreibergetriebe, welches im Kraftfluss zwischen der Belastungsvorrichtung (7) und dem Prüfling (5) angeordnet ist, wobei der piezoelektrische Drehmomentsensor (3) in der Weise angeordnet ist, um die Drehmomente auf jener Seite (I) des Kraftflusses in Bezug auf das Getriebe (8) zu erfassen, auf welcher der Prüfling (5) anordenbar ist, und der zweite Drehmomentsensor (4) in der Weise angeordnet ist, um die Drehmomente auf jener Seite (II) des Kraftflusses in Bezug auf das Getriebe (8) zu erfassen, auf welcher die Belastungsvorrichtung (7) angeordnet ist.

**15.** Prüfstand (1) nach einem der Ansprüche 11 bis 14, wobei das Messprinzip des zweiten Drehmomentsensors (4) auf Dehnungsmessstreifen beruht und der zweite Drehmomentsensor (4) vorzugsweise ein Messflansch ist.

**Claims**

**1.** Method (100) for adjusting a piezoelectric torque sensor (3) of a measuring device (2), which is preferably part of a test bench (1), in particular according to one of claims 11 to 15, for determining a torque which is applied to a test specimen (5) due to a force flow, the measuring device (2) having a piezoelectric torque sensor (3) and a second torque sensor (4) based on a different measuring principle, which is designed in such a way to continuously detect static torques, wherein the measuring device (2) is set up in such a way that both torque sensors measure torques in the force flow (101a, 101b), wherein a target measurement signal of the piezoelectric torque sensor (3) is determined (102) on the basis of a torque measurement by the second torque sensor (4), and wherein the detected measurement signal of the piezoelectric torque sensor is adjusted (103) and output (104) on the basis of the determined target measurement signal.

**2.** Method (100) according to claim 1, wherein the determination of the nominal measurement signal of the piezoelectric torque sensor (3) is carried out in a quasi-stationary frequency range of an oscillation frequency of the torque at the measuring device, in particular in a frequency range below 50 Hz, preferably between about 5 Hz and about 50 Hz.

**3.** Method (100) according to claim 1 or 2, wherein the determination of the nominal measurement signal of the piezoelectric torque sensor (3) is carried out in a frequency range of an oscillation frequency of the torque in which no natural oscillation or resonance modes occur in a measurement environment, in particular on the test bench (1), preferably at an oscillation frequency of the torque of less than about 20 Hz, preferably less than about 10 Hz.

**4.** Method (100) according to claim 2 or 3, wherein the adjustment is carried out during operation of the test specimen (5), wherein a torque in the desired frequency range is isolated by means of a frequency filter, in particular by means of a Fourier analysis.

**5.** The method (100) according to any one of the preceding claims 1 to 4, wherein the target measurement signal of the piezoelectric torque sensor (3) is further determined on the basis of a rotational speed measurement with respect to the test specimen.

**6.** The method (100) of any one of the preceding claims 1 to 5, wherein the target measurement signal of the piezoelectric torque sensor (3) is determined by means of the following equation:

$$M_{Piezo\_cal} = M_W - (J_W + J_{UUT})\, \dot{\omega}_W - M_R$$

whereby

$M_{Piezo\_cal}$ the target measurement signal,

$M_W$ the torque measured by means of the second torque sensor (3) on a shaft (10a, 10b, 10c) or on a shaft train which is non-rotatably connected to the test specimen (5) or is a component of the test specimen (5),

$J_W$ a moment of inertia of a shaft (10a, 10b, 10c) or a shaft train, which are non-rotatably connected to the test specimen (5) or are part of the test specimen (5), $J_{UUT}$ a moment of inertia of the test specimen (5),

$\dot{\omega}_W$ a time derivative of a measured rotational speed of a shaft (10a, 10b, 10c) or a shaft train, which are non-rotatably connected to the test specimen (5) or are part of the test specimen (5), $M_R$ are a frictional torque, which is caused in particular by bearings and/or a gearbox (8).

7. The method (100) according to claim 6, wherein the shaft train comprises a gearbox (8) and wherein the second torque sensor (4) is arranged in the section (II) rotating at a lower speed with respect to the gearbox (8) and the piezoelectric torque sensor (3) is arranged in the section (I) rotating at a higher speed with respect to the gearbox (8).

8. The method (100) according to any one of the preceding claims 1 to 7, wherein the piezoelectric torque sensor (3) measures a reaction torque at at least one support point of the test specimen (5) to determine a torque applied to the test specimen (5).

9. A computer program comprising instructions which, when executed by a computer, cause the computer to perform the steps of a method (100) according to any one of the preceding claims 1 to 8.

10. A computer-readable medium on which a computer program according to claim 9 is stored.

11. Test bench (1) for machines, preferably electric machines, for measuring dynamic torques, in particular set up for carrying out a method according to one of claims 1 to 10, wherein the test bench (1) comprises a piezoelectric torque sensor (3), an adjusting means (12) which is set up to adjust the piezoelectric torque sensor (3) and a second torque sensor (4) which is based on a different measuring principle and which is designed to continuously detect a static portion of the torques, wherein both torque sensors (3, 4) are set up and arranged on the test stand (1) in such a way as to measure torques in a force flow on the test stand (1).

12. Test bench (1) according to claim 11, wherein the piezoelectric torque sensor (3) is designed and arranged in such a way that a force in the force flow between a test specimen (5) and a support device (6) for supporting the test specimen (5) can be measured.

ured.

13. Test stand (1) according to claim 11 or 12 with a loading device (7), in particular a dynamometer or a brake, for applying a load to a test specimen (5).

14. Test stand (1) according to claim 13 with a transmission (8), in particular a high-drive transmission, which is arranged in the force flow between the loading device (7) and the test specimen (5), wherein the piezoelectric torque sensor (3) is arranged in such a way to detect the torques on that side (I) of the force flow in relation to the transmission (8) on which the test specimen (5) can be arranged, and the second torque sensor (4) is arranged in such a way as to detect the torques on that side (II) of the force flow in relation to the transmission (8) on which the loading device (7) is arranged.

15. Test bench (1) according to one of claims 11 to 14, wherein the measuring principle of the second torque sensor (4) is based on strain gauges and the second torque sensor (4) is preferably a measuring flange.

**Revendications**

1. Procédé (100) de réglage d'un capteur de couple de rotation piézoélectrique (3) d'un dispositif de mesure (2), qui fait de préférence partie d'un banc d'essai (1), en particulier selon l'une quelconque des revendications 11 à 15, pour déterminer un couple de rotation, lequel est appliqué à un échantillon (5) en raison d'un flux de force, dans lequel le dispositif de mesure (2) présente un capteur de couple de rotation piézoélectrique (3) et un deuxième capteur de couple de rotation (4), basé sur un autre principe de mesure, lequel est conçu de manière à détecter en continu des couples de rotation statiques, dans lequel le dispositif de mesure (2) est mis au point de manière à ce que les deux capteurs de couple de rotation mesurent (101a, 101b) des couples de rotation dans le flux de force, dans lequel un signal de mesure théorique du capteur de couple de rotation piézoélectrique (3) est déterminé (102) sur la base d'une mesure de couple de rotation par le deuxième capteur de couple de rotation (4), et dans lequel le signal de mesure détecté du capteur de couple de rotation piézoélectrique est réglé (103) et émis (104) sur la base du signal de mesure théorique déterminé.

2. Procédé (100) selon la revendication 1, dans lequel la détermination du signal de mesure théorique du capteur de couple de rotation piézoélectrique (3) est effectuée dans une plage de fréquences quasi stationnaire d'une fréquence d'oscillation du couple de rotation sur le dispositif de mesure, en particulier dans une plage de fréquences inférieure à 50 Hz, de préférence entre environ 5 Hz et environ 50 Hz.

3. Procédé (100) selon la revendication 1 ou 2, dans lequel la détermination du signal de mesure théorique du capteur de couple de rotation piézoélectrique (3) est effectuée dans une plage de fréquences d'une fréquence d'oscillation du couple de rotation, dans laquelle aucun mode d'oscillation propre ou de résonance n'apparaît dans un environnement de mesure, en particulier sur le banc d'essai (1), de préférence à une fréquence d'oscillation du couple de rotation inférieure à environ 20 Hz, de préférence inférieure à environ 10 Hz.

4. Procédé (100) selon la revendication 2 ou 3, dans lequel le réglage est effectué lors du fonctionnement en cours de l'échantillon (5), dans lequel un couple de rotation dans la plage de fréquences souhaitée est isolé au moyen d'un filtre de fréquence, en particulier au moyen d'une analyse de Fourier.

5. Procédé (100) selon l'une quelconque des revendications précédentes 1 à 4, dans lequel le signal de mesure théorique du capteur de couple de rotation piézoélectrique (3) est en outre déterminé sur la base d'une mesure de vitesse de rotation par rapport à l'échantillon.

6. Procédé (100) selon l'une quelconque des revendications précédentes 1 à 5, dans lequel le signal de mesure théorique du capteur de couple de rotation piézoélectrique (3) est déterminé au moyen de l'équation suivante :

$$M_{Piezo\_cal} = M_W - (J_W + J_{UUT})\,\dot{\omega}_W - M_R$$

dans lequel :

$M_{Piezo-cal}$ est le signal de mesure théorique,
$M_W$ est le couple de rotation mesuré au moyen du deuxième capteur de couple de rotation (3) sur un arbre (10a, 10b, 10c) ou sur une ligne d'arbres, lequel/laquelle est relié/reliée à l'échantillon (5) de manière solidaire en rotation ou font partie de l'échantillon (5),
$J_W$ est un couple d'inertie d'un arbre (10a, 10b, 10c) ou d'une ligne d'arbres, lequel/laquelle est relié ou reliée à l'échantillon (5) de manière solidaire en rotation ou fait partie de l'échantillon (5),
$J_{UUT}$ est un couple d'inertie de l'échantillon (5),
$\dot{\omega}_W$ est une déduction temporelle d'une vitesse de rotation mesurée d'un arbre (10a, 10b, 10c) ou d'une ligne d'arbres, lequel/laquelle est relié/reliée à l'échantillon (5) de manière solidaire en rotation ou font partie de l'échantillon (5),
$M_R$ sont un couple de friction, qui est notamment provoqué par des paliers et/ou une boîte de vitesses (8).

7. Procédé (100) selon la revendication 6, dans lequel la ligne d'arbres comporte une boîte de vitesses (8) et dans lequel le deuxième capteur de couple de rotation (4) est disposé dans la section tournant à une vitesse de rotation inférieure (II) par rapport à la boîte de vitesses (8) et le capteur de couple de rotation piézoélectrique (3) est disposé dans la section tournant à une vitesse de rotation plus élevée (I) par rapport à la boîte de vitesses (8).

8. Procédé (100) selon l'une quelconque des revendications précédentes 1 à 7, dans lequel le capteur de couple de rotation piézoélectrique (3) mesure un couple de réaction à au moins un point d'appui de l'échantillon (5) pour déterminer un couple de rotation appliqué à l'échantillon (5).

9. Programme informatique, qui comprend des instructions qui, lorsqu'elles sont exécutées par un ordinateur, l'amènent à exécuter les étapes d'un procédé (100) selon l'une quelconque des revendications précédentes 1 à 8.

10. Support lisible par ordinateur, sur lequel est stocké un programme informatique selon la revendication 9.

11. Banc d'essai (1) pour machines, de préférence machines électriques, pour la mesure de couples de rotation dynamiques, notamment mis au point pour effectuer un procédé selon l'une quelconque des revendications 1 à 10, dans lequel le banc d'essai (1) présente un capteur de couple de rotation piézoélectrique (3), un moyen de réglage (12) qui est mis au point pour régler le capteur de couple de rotation piézoélectrique (3) et un deuxième capteur de couple de rotation (4) basé sur un autre principe de mesure, lequel est conçu de manière à détecter en continu une partie statique des couples de rotation, dans lequel les deux capteurs de couple de rotation (3, 4) sont mis au point et sont disposés sur le banc d'essai (1) de manière à mesurer des couples de rotation dans un flux de force sur le banc d'essai (1).

12. Banc d'essai (1) selon la revendication 11, dans lequel le capteur de couple de rotation piézoélectrique (3) est réalisé et est disposé de manière à ce qu'une force dans le flux de force entre un objet d'essai (5) et un dispositif d'appui (6) pour soutenir l'échantillon (5) puisse être mesurée.

13. Banc d'essai (1) selon la revendication 11 ou 12 avec un dispositif de charge (7), en particulier un dynamomètre ou un frein, pour appliquer une charge sur un échantillon (5).

**14.** Banc d'essai (1) selon la revendication 13 avec une boîte de vitesses (8), en particulier une boîte de vitesses à entraînement élevé, qui est disposée dans le flux de force entre le dispositif de charge (7) et l'échantillon (5), dans lequel le capteur de couple de rotation piézoélectrique (3) est disposé de manière à détecter les couples de rotation sur ce côté (I) du flux de force par rapport à la boîte de vitesses (8), sur lequel précisément l'échantillon (5) peut être disposé, et le deuxième capteur de couple de rotation (4) est disposé de manière à détecter les couples de rotation sur ce côté (II) du flux de force par rapport à la boîte de vitesses (8), sur lequel précisément le dispositif de charge (7) est disposé.

**15.** Banc d'essai (1) selon l'une quelconque des revendications 11 à 14, dans lequel le principe de mesure du deuxième capteur de couple de rotation (4) repose sur des jauges de contrainte et le deuxième capteur de couple de rotation (4) est de préférence une bride de mesure.

$J_{UUT}$

**5**

**6**

$J_W$

$M_R$

**8**

**4**

**7**

**9**

I

II

**1**

**3**

**11**

**10a**

**10b**

**10c**

$M_{Piezo}$

**12**

$M_W$

$\omega_W$

**2**

**Fig. 1**

**101a**

**101b**

**102**

**103**

**104**

**Fig. 2**

EP 4 121 731 B1

$M_{Piezo}$

$\omega_W$

$\dfrac{d}{dt}$

$J_W + J_{UUT}$

$\times$

$M_W$

$M_R = f(n,T)$

LP

$M_{Piezo\_cal}$

LP

$1/s$

$< Limit$

$M'_{Piezo}$

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019144172 A1

**In der Beschreibung aufgeführte Nicht-Patentliteratur**

- **OHZEKI H et al.** DEVELOPMENT OF A MAGNETO-STRICTIVE TORQUE SENSOR FOR MILLING PROCESSMONITORING. *TRANSACTIONS OF THE AMERICAN SOCIETY OF MECHANICAL ENGINEERS,SERIES B: JOURNAL OF ENGINEERING FOR INDUSTRY, ASME. NEW YORK, US,* 01. November 1999, vol. 121 (4), ISSN 0022-0817, 615-622